# EUROPÄISCHE PATENTANMELDUNG

(11) **EP 2 070 429 A1**
(43) Veröffentlichungstag der Anmeldung: **17.06.2009**
(21) Anmeldenummer: 07024184.9
(22) Anmeldetag: 13.12.2007
(51) Int. Cl.: A23L 1/30, A23L 1/00, A23L 3/3544

(54) **Oxidative Stabilisierung von Sterolen und Sterolestern**

(71) Anmelder: Cognis IP Management GmbH, 40589 Düsseldorf (DE)
(72) Erfinder: Horlacher, Peter, 89287 Bellenberg (DE); Müller, Michael, 89165 Dietenheim (DE); Beck, Katja, 89287 Bellenberg (DE)

(57) **Zusammenfassung**

Vorgeschlagen wird ein Verfahren zur Herstellung oxidationsstabiler Sterolformulierungen, bei dem Sterolen oder Sterolestern Catechine und/oder deren Derivate zugesetzt werden, sowie die nach diesem Verfahren hergestellten Formulierungen.

Die Catechine werden vorzugsweise in einer Menge von 20 bis 1000 ppm bezogen auf das Sterol oder den Sterolester eingesetzt. Als Catechinformulierung kann Grünteeextrakt eingearbeitet werden.

Die nach diesem Verfahren hergestellten sterolhaltigen Formulierungen haben eine sehr hohe oxidative Stabilität und weisen keinen unangenehmen Beigeschmack auf.

## Beschreibung

### Gebiet der Erfindung

Die Erfindung befindet sich auf dem Gebiet der Lebensmittel und betrifft ein Verfahren zur Herstellung oxidationsstabiler Sterole und Sterolester, die nach diesem Verfahren hergestellten Zubereitungen, sowie Lebensmittel, die diese Formulierungen beinhalten.

### Stand der Technik

Der Einsatz von Sterolen und Sterolestern als cholesterinsenkende Nahrungsmittelzusatzstoffe wurde vorwiegend bekannt durch die ersten Zulassungen für den Zusatz von Sterolen und Sterolestern in Streichfetten. In der Zwischenzeit ist er auf viele neue Lebensmittelbereiche wie beispielsweise Milchprodukte und Backwaren ausgedehnt worden. Die Anforderungen hinsichtlich der Qualität und Lebensmittelsicherheit müssen der steigenden Zahl an Einsatzprodukten ebenfalls gerecht werden. Die somit geforderten Untersuchungen der Lebensmittelstabilität sind eng mit Bestimmungen der Haltbarkeit der Rohstoffe verbunden.
Beurteilungen der Haltbarkeit bedürfen in erster Linie der Betrachtung von Zersetzungsreaktionen, die über Oxidationsprozesse ablaufen.

Die Oxidation von Sterolen und Sterolestern läuft bekanntermaßen auf enzymatischem oder nicht enzymatischem Wege ab, wobei bei der Herstellung und Lagerung von Sterolrohstoffen und deren Weiterverarbeitung in Endprodukten vorwiegend der nicht enzymatische Weg relevant ist. Man unterscheidet bei diesem Weg wiederum zwei wesentliche Mechanismen:
Die Autoxidation als Oxidation, die über freie Radikale initiiert wird, sowie die Photooxidation als nichtradikalische Oxidation. Da Rohstoffe und deren weiterverarbeitete Produkte in der Regel unter Lichtausschluss gelagert werden, nimmt bei der Beurteilung der oxidativen Stabilität von Sterolen und Sterolestern die radikalische Oxidation die wesentliche Stellung ein

Der oxidative Abbau startet über freie Radikale, die über Peroxidradikale zu verschiedenen Sterolhydroperoxiden führen. Erhöhte Temperatur, oxidative Sauerstoffspecies und Metalle sind dabei Initiatoren. Von den Sterolhydroperoxiden kann als erstes das C7-hydroperoxid nachgewiesen werden. Erhitzen oder Lagerung von Sterol 7-hydroperoxiden führt dann zu 7-hydroxysterolen und 7-ketosterolen als sekundären oxidativen Abbauprodukten (Smith L.L., 1987 - Cholesterol autoxidation 1981-1995, Chem. Phys. Lipids 31: 453-487).

Die Autoxidation der Sterolfettsäureester verläuft nach dem gleichen radikalischen Mechanismus wie die der freien Sterole. Die Derivatisierung der Sterole ergibt jedoch weitere Angriffspunkte, so dass der oxidative Angriff entweder bevorzugt auf den Sterolteil oder auf den Fettsäureanteil erfolgen kann. Auch eine intramolekulare Oxidation von Sterolfettsäureestern ist so möglich.
Nach Einarbeitung der Sterolester in Nahrungsmittelsysteme werden die Sterol abbauenden Reaktionen weiterhin komplexer. Die Oxidationsrate ist hier nicht nur von der Struktur des Fettsäurerestes und dem Sterol abhängig, sondern verändert sich auch mit der Matrix, in die der Ester eingearbeitet ist und der Temperatur.
Versuche von Yanishlieva - Maslarova und Marinova (Yanishlieva, N. und Marinova, E., 1980, Autoxidation of sitosterol I: Kinetic studies on free and esterified sitosterol. Riv. Ital. Sost. Grasse 57: 477-480. Yanishlieva - Maslarova, N., Schiller, H., Seher, A., 1982, Die Autoxidation von Sitosterin III. Sitosterylstearart. Fette, Seifen, Anstrichmittel 84: 308-311.) zur Kinetik der Autoxidation von reinem Sitosterol und reinen Sitosterolestern haben gezeigt, dass zu Beginn der Autoxidation die Umsetzungsrate des veresterten Sitosterols weitaus höher ist als die des freien Sitosterols, während bei fortschreitender Oxidation, wenn neben den Peroxiden bereits 7-hydroxysterol und 7-ketosterol angereichert sind, die Oxidationsrate des freien Sitosterols höher ist. Denkbar ist eine physikalischer Mechanismus in Form einer sterischen Hinderung, die bewirkt dass eine Oxidation zuerst an dem Fettsäurerest stattfindet und so die Oxidation am Sterolmolekül einschränkt. Bei einer intramolekularen Oxidation kann die bereits oxidierte Fettsäure nachfolgend den Sterolanteil im selben Molekül angreifen. Auch diese Hypothesen zeigen, dass der oxidative Abbau der veresterten Sterole noch weitgehend ungeklärt ist.

Auch, wenn reine Sterole bei Raumtemperatur noch relativ stabil sind und erst bei erhöhten Temperaturen die Oxidationsneigung deutlich ansteigt, haben Untersuchungen sterolhaltiger Lebensmittel nach oxidativen Abbauprodukten von Sterolen ergeben, dass bereits die Rohmaterialien einen deutlichen Anteil an Steroloxiden enthalten, der bei der Verarbeitung in Lebensmitteln nicht nennenswert steigt. (Laura Soupas, University of Helsinki, Faculty of Agriculture and Forestry, Department of Applied Chemistry and Microbiology, Food chemistry, Helsinki 2006, Oxidative stability of phytosterols in food models and foods. Doctoral dissertation, November 2006).

Es ist daher zwingend notwendig reinen Sterolen und auch deren Estern bereits zur Lagerung bei Raumtemperatur Stabilisatoren zuzusetzen. Als Antioxidantien und Konservierungsmittel werden Sterolestern häufig Tocopherole, Lecithine Ascorbinsäure, Parabene, Butylhydroxytoluol oder -anisol, Sorbinsäure oder Benzoesäure und deren Salze zugesagt. Am häufigsten werden Tocopherole als Antioxidantien eingesetzt.
In der japanischen Patentanmeldung JP 2004018678 werden Sterolfettsäureester mit einer hohen oxidativen Stabilität offenbart. Diese Stabilität wird durch den Zusatz einer Mischung aus Ascorbinsäureester und Lecithin zu den Sterolestern erreicht, bevorzugt wird zusätzlich noch Vitamin E der Antioxidansmischung zugefügt. Alpha-Tocopherol in Kombination mit Ascorbinsäure wird auch in der Internationalen Anmeldung WO 00/1491 A1 als Antioxidans von Sterol- und Stanolestern in Milchprodukten beschrieben.
In der Internationalen Anmeldung WO 2005/099484 A1 werden spezielle Tocopherolzusammensetzungen mit hohen Anteilen an gamma- und delta-Tocopherol mit dem herkömmlich eingesetzten alpha-Tocopherol verglichen. Es wurde festgestellt, dass bei vergleichbarer antioxidativer Wirkung ein negativer Beigeschmack der herkömmlichen Antioxidantien beim Einsatz von gamma- und delta-Tocopherol nicht eintritt.

Aufgabe der vorliegenden Erfindung war es, sterolesterhaltige Formulierungen zur Verfügung zu stellen, die sich durch eine verbesserte oxidative Stabilität auszeichnen und mit Lebensmitteln gut verträglich sind. Die Formulierungen sollen in den Lebensmitteln gute sensorische und organoleptische Eigenschaften aufweisen und sich leicht verarbeiten lassen.

### Beschreibung der Erfindung

Gegenstand der Erfindung ist die Verwendung von catechinhaltigem Grünteeextrakt oder Catechinen zur oxidativen Stabilisierung von Sterol(ester)formulierungen, sowie das Verfahren zur Herstellung oxidationsstabiler Sterolformulierungen, bei dem Sterolen oder Sterolestern Catechine und/oder deren Derivate zugesetzt werden

### Sterol- und/oder Stanol

In der vorliegenden Erfindung werden aus Pflanzen und pflanzlichen Rohstoffen gewonnene Sterole, sogenannte Phytosterole und Phytostanole eingesetzt. Bekannte Beispiele sind Ergosterol, Brassicasterol, Campesterol, Avenasterol, Desmosterol, Clionasterol, Stigmasterol, Poriferasterol, Chalinosterol, Sitosterol und deren Mischungen, darunter werden bevorzugt β-Sitosterol und Campesterol verwendet. Ebenso fallen die hydrierten gesättigten Formen der Sterole, die sogenannten Stanole, die aufgrund ihrer höheren oxidativen Stabililität allerdings weniger Antioxidantien benötigen, unter die eingesetzten Verbindungen, auch hier werden β-Sitostanol und Campestanol bevorzugt. Als pflanzliche Rohstoffquellen dienen unter anderem Samen und Öle von Sojabohnen, Kanola, Palmkernen, Mais, Kokos, Raps, Zuckerrohr, Sonnenblume, Olive, Baumwolle, Soja, Erdnuss oder Produkte aus der Tallölproduktion.

Vorzugsweise werden Ester der aus Pflanzen und pflanzlichen Rohstoffen gewonnenen Sterole mit den Catechinen und deren Derivaten stabilisiert, da diese überraschender Weise eine höhere Oxidationsempfindlichkeit aufwiesen. Unter den Sterolestern bevorzugt sind Veresterungsprodukte mit gesättigten und/oder ungesättigten Fettsäuren mit 6 bis 22 Kohlenstoffatomen, besonders bevorzugt sind Sterolfettsäureester mit Fettsäurekettenlängen von 12 bis 18 Kohlenstoffatomen sowie Sterolfettsäureester mit mittelkettigen Fettsäuren von 8 und 10 Kohlenstoffatomen.
Die Erfindung ist jedoch nicht begrenzt auf diese Art der Ester. So sind auch Phenolsäureester, insbesondere Derivate der Zimtsäure, Kaffeesäure und Ferulasäure einsetzbar.
Dabei können natürlich vorkommende Ester aus pflanzlichen Rohstoffen direkt gewonnen werden, oder die Sterol-/Stanolester werden durch Umesterung mit anderen Estern hergestellt. Ebenso können Derivate eingesetzt werden, die durch Veresterung freier Sterole oder Stanole mit den entsprechenden Fettsäuren entstanden sind.

### Grünteeextrakt und Catechine

Die im Handel seit einigen Jahren erhältlichen Grünteeextrakte sind bekannt für ihre antioxidative Wirkung im Körper. Das Wirkprinzip wird vorwiegend den Polyphenolen zugeschrieben, die Flavonoide, Flavanole, Flavandiole und Phenolsäuren umfassen. In Abhängigkeit von Klima und Standort enthalten Grünteepflanzen (Camellia sinensis) bis zu 36 % Polyphenole bezogen auf das Trockengewicht. Der überwiegende Teil der Polyphenole sind Flavanole, besser bekannt unter der Bezeichnung Catechine (Fig. 1), diese werden wiederum in die hauptsächlichen Catechine (-)-Epigallocatechin (EGC), (-)-Epigallocatechin-3-gallat (EGCG), (-)-Epicatechin (EC) und (-)-Epicatechin-3-gallat (ECG) unterschieden. Zusätzlich zu den erwünschten physiologischen Wirkungen wie antimutagene, anticarcinogene, antivirale und antibakterielle Eigenschaften wird Epigallocatechin-3-gallat (EGCG) auch der stärkste antioxidative Effekt zugeschrieben. Catechine können durch ihre starken antioxidativen Fähigkeiten dazu beitragen, Herz-Kreislauf- und Krebskrankheiten vorzubeugen.
Catechine hemmen die Carcinogenese durch ein Blocken der endogenen Bildung von N-Nitroso- Verbindungen. Sie aktivieren auch die Glutathionperoxidase, ein starkes antioxidatives Enzym und sind wirksame Fänger der Radikalen Hydrogenperoxid, Superoxid und Singulettsauerstoff. Sie werden sogar als Antioxidantien in kosmetischen Produkten eingesetzt, um die Hautalterung und -schädigung durch Umwelteinflüsse und UV-Licht zu mindern.
Zahlreiche Methoden zur Extraktion Polyphenolreicher Extrakte sind in der Literatur beschrieben. 150 ml Grüner Tee enthalten 0,7 - 1,3 mg Epicatechin, 4,3 bis 8,6 mg Epicatechingallat, 0,5 bis 1 mg Epigallocatechin und 10 bis 25 mg Epigallocatechingallat. Üblicherweise wird ein flüssiger Extrakt mit Wasser oder wassermischbaren Lösungsmitteln durch Erhitzen oder Kochen der Teeblätter hergestellt, der dann durch Trocknung zum Pulver aufkonzentriert wird. Beispielhaft seien die Internationalen Anmeldungen WO 96/28178 A1, WO 01/56586 A1 hier erwähnt.

Auch, wenn Catechine Hauptinhaltsstoff des Grünen Tees sind, kommen sie in vielen anderen Baumarten vor, so dass der Gegenstand der Erfindung nicht auf Grünteeextrakt beschränkt sein soll.

### Fig. 1

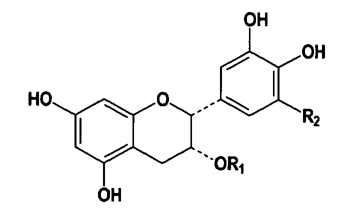

| | R1 | R2 |
|---|---|---|
| (-)-Epicatechin | H | H |
| (-) Epigallocatechin | H | OH |
| (-) Epicatechin-3-gallate | Galloyl | H |
| (-) Epigallocatechin-3-gallate | Galloyl | OH |

Der Gehalt an Catechinen (inklusive der entsprechenden Ester) in der oxidationsstabilisierten Sterol(ester)formulierung beträgt 20 - 1000 ppm, bevorzugt 30 - 500 ppm, besonders bevorzugt 50 - 300 ppm. Wird Grünteeextrakt eingesetzt ist die Menge des Extraktes entsprechend der darin enthaltenen Catechinkonzentration auszuwählen.

Es ist dabei überraschend, dass die stabilisierte Sterolformulierung mit den sonst bitter schmeckenden Catechinen bereits bei dieser Konzentration keinen Beigeschmack oder negativen Nachgeschmack mehr aufweist und gleichzeitig eine bessere antioxidative Wirkung als Sterolformulierungen mit anderen Antioxidantien entfaltet.
Als bevorzugtes Catechin wird Epigallocatechin-3-gallat eingesetzt, da dieses Catechin die stärkste antioxidative Wirkung hat. Konzentrationen von 30 bis 500 ppm, vorzugsweise 30 bis 200 ppm sind bereits ausreichend für eine starke antioxidative Wirkung und weisen keinen bitteren Beigeschmack im Sterol(ester), sowie in den damit hergestellten Lebensmittelformulierungen auf.
Catechine sind in Wasser und wassermischbaren organischen Flüssigkeiten gut löslich. Sie lassen sich daher nicht direkt in die eher lipophilen Sterole und Sterolester einarbeiten. Setzt man also Grünteeextrakt oder Catechine zur Stabilisierung ein, werden vorteilhafter Weise Emulgatorhaltige Vormischungen mit den Catechinen oder dem Grünteeextrakt hergestellt.
Diese Catechinkonzentrate lassen sich mit und ohne Wasser formulieren. Die wasserhaltigen Konzentrate ergeben nach dem Lösen in Öl eine W/O Mikroemulsion. Entsprechend ist ein weiterer Gegenstand der Erfindung das Verfahren zur Herstellung oxidationsstabiler Sterolformulierungen, bei dem man
a) Grüntee-Extrakt in Wasser löst,
b) diese Lösung/Dispersion mindestens einem durch Erwärmen aufgeschmolzenen Emulgator zusetzt,
c) gegebenenfalls ein Hilfsöl zur Emulgierung zusetzt und
d) das Wasser durch Vakuumtrocknung, Gefriertrocknung oder Sprühtrocknung entfernt und
e) das so gewonnene Pulver einem aufgeschmolzenen Sterol(ester) zusetzt und unter ständigem Rühren abkühlt.
Versetzt man den Grüntee-Extrakt nicht mit Wasser, sondern dispergiert ihn direkt im aufgeschmolzenen Emulgator, erübrigt sich die Entfernung des Wassers.
Eine gute Weiterverarbeitung in hydrophile sowie lipophile Matrices ergeben die Catechinkonzentrate, die einen hydrophilen sowie einen lipophilen Emulgator enthalten und ein zusätzliches Hilfsöl umfassen. Als Hilfsöl lassen sich übliche pflanzliche Öle wie Sonnenblumenöl, Fischöle, konjugierte Linolsäuren oder mittelkettige Triglyceride einsetzen Die Formulierung, die sich am einfachsten weiterverarbeiten lässt und die beste physikalischchemische Stabilität aufweist, hat die folgende Zusammensetzung:

| | |
|---|---|
| Grüntee-Extrakt (ca. 70 % Catechine bezogen auf die Trockenmasse) | 5 - 20 Gew. % |
| Glycerinmonooleat | 10 - 35 Gew. % |
| Weinsäureester | 10 - 35 Gew. % |
| C8/C10 - Triglyceride | 10 - 50 Gew. % |
| Wasser | 0 - 10 Gew. % |

Diese Formulierung lässt sich einfach und schnell in Sterole und Sterolester einarbeiten.

Bei der Weiterverarbeitung wurde außerdem festgestellt, dass sich die Komponente des Hilfsöls auch direkt durch den Einsatz von Sterolen oder Sterolestern ersetzen lässt. Bevorzugte Formulierungen dieser Zusammensetzung sind:

| | |
|---|---|
| Grüntee-Extrakt (ca. 70 % Catechine bezogen auf die Trockenmasse) | 5 - 20 Gew. % |
| Glycerinmonooleat | 10 - 35 Gew. % |
| Weinsäureester | 10 - 35 Gew. % |
| Sterolester | 10 - 50 Gew. % |
| Wasser | 0 - 10 Gew. % |

Ein weiterer Gegenstand der Erfindung ist daher das Verfahren zur Herstellung oxidationsstabiler Sterolformulierungen, bei dem man
a) Grüntee-Extrakt gegebenenfalls in Wasser löst,
b) den Extrakt direkt oder die wässrige Lösung/Dispersion einem durch Erwärmen aufgeschmolzenen Emulgator zusetzt,
c) aufgeschmolzene Sterole und/oder Sterolester zur Emulgierung zusetzt und
d) gegebenenfalls das Wasser durch Vakuumtrocknung, Gefriertrocknung oder Sprühtrocknung entfernt und
e) die aufgeschmolzene Mischung unter ständigem Rühren abkühlt.

Möchte man beim Einsatz der Catechine in Sterolen und Sterolestern auf die Anwesenheit von Emulgatoren verzichten, so können auch Derivate des Catechins eingesetzt werden, da diese eine verbesserte Öllöslichkeit gegenüber den freien Catechinen aufweisen und direkt ohne Einsatz eines Emulgators in Sterole und Sterolester eingearbeitet werden können.
Überraschenderweise weisen auch die Gyceride und Ester des Catechins bevorzugt Catechine verestert mit langkettigen Fettsäuren einer Kohlenstofflänge von C 12 bis C22 (Bezug: Polaris Moulin du Pont, 29170 PLEUVEN, Frankreich) eine höhere Oxidationshemmung als die üblicherweise eingesetzten Antioxidantien auf. Sie lassen sich hervorragend in lipophilen Matrices verarbeiten. Dazu werden die Catechinester, die fett- bzw. ölloslich sind zu den aufgeschmolzenen Sterinestern unter Schutzgas zugegeben und bis zum Erkalten gerührt.

Vorteilhafterweise ergeben Kombinationen von Catechinen und anderen Antioxidationsmitteln synergistische Effekte. Insbesondere die Kombination von Catechin mit Ascorbylpalmitat zeigte hervorragende Stabilitätswerte bei der Anwendung in Sterolestern. Bei Erwärmung von Milchprodukten, wie bei der Pasteurisierung haben diese Produkte sehr gute sensorische Eigenschaften. In Abmischung mit Ascorbylpalmitat tritt zudem kaum Verfärbung auf.

### Verwendung

Die erfindungsgemäße stabilisierte Sterolformulierung kann auf einfache Weise in Lebensmittel, ausgewählt aus der Gruppe, die gebildet wird von Streichfetten, Margarine, Butter, pflanzliche Öle, Bratfetten, Erdnussbutter, Mayonnaise, Dressings, Soßen, Cerealien, Brot- und Backprodukten, Kuchen, Weizenbrot, Roggenbrot, Toastbrot, Knäckebrot, Speiseeis, Puddings, Milchprodukten, fermentierten Milchprodukten, Joghurt, Quark, Sahne, Käse, Streichkäse, Eiern, Eibasierten Produkten, Süßwaren, Schokolade, Kaugummi, Müsliriegel, Sorbet, Milchgetränken, Sojagetränken, Fruchtsäften, Gemüsesäften, fermentierten Getränken, Nudeln, Reis, Soßen, Fleisch- und Wurstwaren, eingearbeitet werden.
Besonders wasserhaltige und temperaturempfindliche Lebensmittelprodukte wie Getränke und Milchprodukte, wie beispielsweise Milch, Milchgetränke, Molke-, Joghurtgetränke, Fruchtsäfte, Fruchtsaftgemische, Fruchtsaftgetränke, Gemüsesäfte, kohlensäurehaltige und kohlensäurefreie Getränke, Sojamilchgetränke oder proteinreiche flüssige Nahrungsersatzgetränke, sowie fermentierte Milchzubereitungen, Joghurt, Trinkjoghurt, oder Käsezubereitungen sind als Grundlagen für die erfindungsgemäßen oxidationsstabilen Sterolformulierungen geeignet. Diese wasserhaltigen Produkte weisen eine hohe Stabilität während der Lagerung auf. Dies hat zur Folge, dass keine Geschmacksbeeinträchtigungen durch Oxidation zu beobachten sind.

Ein weiterer Gegenstand der Erfindung betrifft daher Lebensmittelprodukte, die die erfindungsgemäßen oxidationsstabilisierten Sterolformulierungen enthalten, üblicherweise in einer Menge von 0,1 bis 50 Gew.-%, bevorzugt 0,5 bis 20 Gew.-% , besonders bevorzugt 1 bis 10 Gew. % der Sterolformulierungen bezogen auf das Gesamtgewicht der Lebensmittel.

### Beispiele

### Beispiel 1- Herstellung der Catechinhaltigen Sterolester

### Herstellung der Catechinmischung:

25 g Glycerinmonooleat (Monomuls 90-018, Hersteller: Cognis GmbH, Illertissen) und 25 g Weinsäureester (Lamegin DWP 2000, Hersteller: Cognis GmbH, Düsseldorf) werden auf ca. 50°C erwärmt und unter Rühren gemischt und aufgeschmolzen. Anschließend werden 9,1 g der Catechin-Mischung bestehend aus Green Tea Low Caffeine Dry Extrakt (Bezug Cognis Iberia) (Caffeine: 0,33%; Epigallocatechin gallate: 42,7%; total catechins: 70,46 %) in 3,4 g Wasser in die Emulgator-Vormischung eingerührt. Nach homogener Verteilung werden 37,5 g C8/C10 Mittelkettige Triglyceride (Delios V - Cognis GmbH, Düsseldorf) zudosiert. Anschließend wird dass Wasser durch Gefriertrocknung entfernt.

### Herstellung der Mischung aus Sterinester und Catechinen:

Nicht stabilisierter Sterinester (Vegapure 95 FF, Cognis GmbH, Düsseldorf) wurde auf 50°C erwärmt, die gewünschte Menge an Catechinmischung zugesetzt und unter langsamem Abkühlen auf Raumtemperatur eingerührt.
1 a)
100 g Vegapure 95 FF, nicht stabilisiert,
und 1,5 g Catechinmischung (entspricht 1000 ppm Gesamtcatechin)
1b)
100 g Vegapure 95 FF, nicht stabilisiert
und 0,3 g Catechinmischung (entspricht 200 ppm Gesamtcatechin)

### Untersuchungen:

Ein geschultes Expertenteam beurteilte die Produkte direkt nach der Herstellung und nach Lagerung über zwei Wochen bei 5 bis 8 °C bezüglich ihres Geschmackes.
Die oxidative Stabilität wurde mittels eines Ranzimattestes ermittelt. Hierzu wurden 5,0 g der entsprechenden Mischung bei 120°C mit 20 l Luft/h behandelt.
Die Induktionsperioden (Maß für die oxidative Stabilität) der einzelnen Mischungen waren:

**Tabelle 1: Rancimat Test von Vegapure 95 FF, Bedingungen: 5 g bei 120°C mit 20 l Luft/h**

| **Antioxidans** | **Induktionszeit** |
|---|---|
| Sterolester (Vegapure 95 FF) nicht stabilisiert (1) | 1,4 h |
| (1) mit 550 ppm Covi-ox T 90 EU + 500 ppm Ascorbylpalmitat | 4,3 h |
| (1) mit 200 ppm Catechin | 6,3 h |
| (1) mit 300 ppm Catechin | 10,2 h |

Wie die Tabelle zeigt, weisen die Mischungen mit Catechin eine deutlich höhere oxidative Stabilität auf gegenüber einer Antioxidansmischung aus gemischten Tocopherolen und Asorbylpalmitat. Ein Fremdaroma konnte bei keiner der stabilisierten Proben festgestellt werden.

### Beispiel 2 - Herstellung der Catechinhaltigen Sterolester ohne Hilfsöl

25 g Glycerinmonooleat (Monomuls 90-018, Hersteller: Cognis GmbH, Düsseldorf) und 25 g Weinsäureester (Lamegin DWP 2000, Hersteller: Cognis GmbH, Düsseldorf) werden auf ca. 50°C erwärmt und unter Rühren gemischt und aufgeschmolzen. Anschließend werden 9,1g der Catechin-Mischung bestehend aus Green Tea Low Caffeine Dry Extrakt (Bezug Cognis Iberia) (Caffeine: 0,33%; Epigallocatechin gallate: 42,7%; total catechins: 70,46 %) in 3,4 g Wasser in die Emulgator-Vormischung eingerührt. Nach homogener Verteilung werden 37,5 g nicht stabilisierter Sterinester (Vegapure 95 FF - Cognis GmbH, Düsseldorf), der bei 50°C aufgeschmolzen wurde, zudosiert und anschließend gefriergetrocknet. Der Rancimat Test erfolgte analog Tabelle 1.

Rancimat-Test analog oben:

**Tabelle 2: Rancimat Test von Vegapure 95 FF, Bedingungen: 5 g bei 120°C mit 20 l Luft/h**

| **Antioxidans** | **Induktionszeit** |
|---|---|
| Sterolester (Vegapure 95 FF) nicht stabilisiert (1) | 1,4 h |
| (1) mit 200 ppm Catechin | 6,6 h |

### Beispiel 3 - Herstellung der Sterolester mit Catechin und Ascorbylpalmitat

Nicht stabilisierter Sterinester (Vegapure 95 ER, Cognis GmbH, Düsseldorf) wurde auf 50°C erwärmt, die gewünschte Menge an Catechinmischung (gemäß Beispiel 1) und an Ascorbylpalmitat wurde zugesetzt und unter langsamem Abkühlen auf Raumtemperatur eingerührt.

**Tabelle 3: Rancimat Test von Vegapure 95 ER, Bedingungen: 5 g bei 120°C mit 20 l Luft/h**

| **Antioxidans** | **Induktionszeit** |
|---|---|
| Sterolester (Vegapure 95 ER) nicht stabilisiert (2) | 2,6 h |
| (2) mit 200 ppm Catechin | 16,5 h |
| (2) mit 200 ppm Catechin + 500 ppm Ascorbylpalmitat | 25,0 h |

Der Rancimattest zeigte in der Kombination Catechin und Ascorbylpalmitat deutliche synergistische Effekte.

### Beispiel 4 - Anwendung der catechinhaltigen Sterolester in Milch

Je 1,5 g Sterolester hergestellt nach den Beispielen la, 1b, Beispiel 2 und Beispiel 3 wurden 100 ml fettarmer Milch (1,5 % Fett) unter kräftigem Rühren bei 60 °C im Ultra-Turrax zugesetzt. Nach der Pasteurisation bei 80 °C wurde die Mischung bei 200 bar homogenisiert und auf 8°C abgekühlt. Als Vergleich wurden die entsprechenden Mengen Catechinmischung aus Beispiel 1 ohne Sterolester der Milch nach dem gleichen Verfahren zugesetzt.

Alle sterolesterhaltigen Milchzubereitungen hatten keinen Beigeschmack durch den Zusatz des Antioxidans. Bei den sterolesterfreien Vergleichszubereitungen konnte ein leicht bitterer Geschmack detektiert werden. Die Milchzubereitungen waren stabil über den Beobachtungszeitraum von 4 Wochen.

### Beispiel 5 - Anwendung der catechinhaltigen Sterolester in Joghurt

Gemäß Beispiel 4 wurden vier unterschiedliche Zubereitungen sterolesterhaltiger Milch hergestellt. Nach der Homogenisation bei 200 bar wurden die Milchzubereitungen auf 45°C abgekühlt. 450 g der so hergestellten Milchdispersionen wurden mit je 50 g einer Bakterien-Starterkultur für Joghurt (YC 180 by Chr. Hansen) versetzt

Der Fermentationsprozess wurde im Inkubator bei 45°C durchgeführt. Nachdem die Proben einen pH-Wert von 4,5 bis 4,6 aufwiesen wurden sie auf Raumtemperatur abgekühlt. Für den gemischten Joghurt wurden dann 7 Gew. % Zucker unter Rühren zugefügt.
Für die Herstellung des Trinkjoghurts wurde ein Teil der Proben bei 80 bis 100 bar homogenisiert (Hochdruckhomogenisator APV).

Bei der nachfolgenden Geschmacksprobe konnte bei keiner der Proben ein unangenehmer Beigeschmack oder ein Fremdaroma durch die Oxidationsstabilisierung festgestellt werden.

## Patentansprüche

1. Verwendung von Catechinen und/oder Catechinderivaten zur oxidativen Stabilisierung von Sterolen und Sterolestern.

2. Verwendung gemäß Anspruch 1, **dadurch gekennzeichnet, dass** man Catechine und deren Derivate in einer Menge von 20 bis 1000 ppm Gesamtcatechin bezogen auf die Sterole und/oder Sterolester verwendet.

3. Verfahren zur Herstellung oxidationsstabiler Sterolformulierungen, bei dem Sterolen oder Sterolestern Catechine und/oder deren Derivate zugesetzt werden.

4. Verfahren zur Herstellung oxidationsstabiler Sterolformulierungen nach Anspruch 3, **dadurch gekennzeichnet, dass** man als Catechinformulierung Grünteeextrakt zusetzt.

5. Verfahren zur Herstellung oxidationsstabiler Sterolformulierungen nach den Ansprüchen 3 und/oder 4, **dadurch gekennzeichnet, dass** man Catechine und deren Derivate in Form einer Emulsion oder in Form eines emulgatorhaltigen Pulvers zusetzt.

6. Verfahren zur Herstellung oxidationsstabiler Sterolformulierungen nach mindestens einem der Ansprüche 3 bis 5, **dadurch gekennzeichnet, dass** man die Catechine und/oder deren Derivate in einer Menge von 20 bis 1000 ppm Gesamtcatechin zusetzt.

7. Verfahren zur Herstellung oxidativer Sterolformulierungen nach mindestens einem der Ansprüche 3 bis 6, **dadurch gekennzeichnet dass** man als Catechinderivate Gykoside oder Fettsäureester einsetzt.

8. Verfahren zur Herstellung oxidationsstabiler Sterolformulierungen nach mindestens einem der Ansprüche 3 bis 6, **dadurch gekennzeichnet, dass** man eine Emulsionsformulierung enthaltend Catechine, mindestens einen lipophilen Emulgator, mindestens einen hydrophilen Emulgator und gegebenenfalls ein Hilfsöl zusetzt.

9. Verfahren zur Herstellung oxidationsstabiler Sterolformulierungen nach Anspruch 8, bei dem man
a) Grüntee-Extrakt in Wasser löst,
b) diese Lösung/Dispersion mindestens einem durch Erwärmen aufgeschmolzenen Emulgator zusetzt,
c) gegebenenfalls ein Hilfsöl zur Emulgierung zusetzt und
d) das Wasser durch Vakuumtrocknung, Gefriertrocknung oder Sprühtrocknung entfernt und
e) das so gewonnene Pulver einem aufgeschmolzenen Sterol(ester) zusetzt und unter ständigem Rühren abkühlt.

10. Oxidationsstabile Sterolformulierungen, enthaltend
Sterole und/oder Sterolester und Catechine, wobei die Catechine in einer Menge von 20 bis 1000 ppm bezogen auf die oxidationsstabile Sterolformulierung vorliegen.

11. Oxidationsstabile Sterolformulierungen, enthaltend
Sterole und/oder Sterolester und Catechinderivate, wobei die Catechinderivate in einer Menge von 20 bis 1000 ppm bezogen auf die oxidationsstabile Sterolformulierung vorliegen.

12. Oxidationsstabile Sterolformulierungen gemäß Anspruch 11, **dadurch gekennzeichnet, dass** sie als Catechinderivate Glycoside oder Catechinfettsäureester enthalten.

13. Oxidationsstabile Sterolformulierungen gemäß Anspruch 10, **dadurch gekennzeichnet, dass** sie mindestens 30 bis 500 ppm Epigallocatechin-3-gallat und gegebenenfalls einen Emulgator enthalten.

14. Lebensmittel, enthaltend 0,1 bis 50 Gew. % der oxidationsstabilen Sterolformulierungen gemäß der Ansprüche 10 bis 13.
